Europäisches Patentamt

(19) European Patent Office

Office européen des brevets

(11) Numéro de publication: **0 296 906**
A1

(12) **DEMANDE DE BREVET EUROPEEN**

(21) Numéro de dépôt: 88401291.5

(22) Date de dépôt: 26.05.88

(51) Int. Cl.⁴: **B 29 C 67/22**

(30) Priorité: 29.05.87 FR 8707840
11.02.88 FR 8802049

(43) Date de publication de la demande:
28.12.88 Bulletin 88/52

(84) Etats contractants désignés:
AT BE CH DE ES GB GR IT LI LU NL SE

(71) Demandeur: INVESTISSEMENTS ET RECHERCHES
INDUSTRIES SPECIALISEES en abréviation IRIS,
Société Civile particulière
Avenue des Landes
F-47310 Brax (FR)

(72) Inventeur: Jarlan, Alexandre Bâtiment A, appartement 52
Les Portes d'Estanove 2500, Boulevard Paul-Valéry
F-34100 Montpellier (FR)

(74) Mandataire: Morelle, Guy Georges Alain et al
SC Morelle & Bardou 1, Avenue de Rangueil
F-31400 Toulouse (FR)

(54) Procédé de réalisation d'un matériau composite de construction et produit ainsi obtenu.

(57) La présente invention concerne les procédés de réalisation d'un matériau composite de construction, les dispositifs permettant de mettre en oeuvre lesdits procédés, et les produits obtenus.

Le procédé et le dispositif se caractérisent essentiellement par le fait que, par des premiers moyens 1-5, il est déroulé au moins trois bandes, respectivement d'un support d'armature 6, d'un matériau spongieux 7, 8, d'un matériau de démoulage 11, 12, sur un premier trajet, de telle façon que les bandes soient espacées les unes des autres, par des deuxièmes moyens 17, il est injecté une mousse expansible sous forme liquide dans les espaces 9, 10, 13, 14, et qu'il est prévu des moyens 16 pour exercer des forces de pression sur l'ensemble des trois bandes après que la mousse liquide ait été injectée.

Application à la réalisation en continu de matériaux de construction composites pour l'édification de différents éléments, dans de nombreux domaines comme l'industrie, le bâtiment, les loisirs, etc...

## Description

## PROCEDE DE REALISATION D'UN MATERIAU COMPOSITE DE CONSTRUCTION ET PRODUIT AINSI OBTENU

La présente invention concerne les procédés de réalisation d'un matériau composite, ainsi que les produits obtenus, trouvant une application dans la construction ou l'édification de différents éléments dans de nombreux domaines : l'industrie, le bâtiment, les loisirs, etc...

Les matériaux de construction alliant à la fois solidité, légèreté, et prix de revient le plus faible possible, sont, bien évidemment, de plus en plus recherchés.

Dans cet esprit, il a été proposé de nombreux matériaux de différentes compositions auxquels a été donné un nom générique de "matériaux composites" significatif pour les techniciens, dans le domaine des matériaux solides et légers. Cependant, dans la plupart des cas, ces matériaux, par exemple ceux à base de fibres de carbone, sont d'un prix de revient très élevé. Leur utilisation n'est donc rentable que pour certaines applications dans le domaine industriel, comme par exemple, l'aéronautique, ou dans des domaines voisins. Par contre, ce prix de revient élevé est un obstacle infranchissable pour l'utilisation de tels matériaux composites dans le domaine du bâtiment ou celui des loisirs.

La présente invention a pour but de mettre en oeuvre un procédé de réalisation d'un nouveau matériau comosite alliant rigidité, solidité, légèreté et prix de revient relativement faible, pouvant trouver des applications dans de nombreux domaines pratiquement interdits aux matériaux composites connus à ce jour.

Plus précisément, la présente invention a pour objet un procédé de réalisation d'un matériau composite caractérisé par le fait qu'il consiste à faire expanser une mousse expansible avec un matériau spongieux, en coulant ladite mousse sur ledit matériau spongieux.

La présente invention a pour objet également un procédé de réalisation d'un matériau composite, essentiellement suivant une technique de production industrielle, en mettant en oeuvre le procédé défini ci-dessus.

La présente invention a ainsi pour objet un procédé, caractérisé par le fait qu'il consiste à faire défiler au moins trois bandes respectivement de support d'armature, d'une âme de matériau spongieux et d'un matériau de démoulage, la bande de matériau spongieux étant située dans l'espace délimité entre les deux autres bandes, le défilement desdites bandes s'effectuant sur un premier trajet de telle façon qu'elles soient espacées les unes des autres pour pouvoir injecter une mousse expansible sous forme liquide dans les deux espaces délimités entre lesdites trois bandes et respectivement sur les faces de ladite bande de matériau spongieux, ledit défilement étant prolongé sur un deuxième trajet d'une longueur déterminée permettant à ladite mousse de pénétrer dans ladite bande de matériau spongieux par ses deux faces opposées, ledit défilement étant prolongé sur au moins un troisième trajet suivant le second sur une deuxième longueur déterminée, des forces de pression étant exercées sur l'ensemble des trois bandes, tout au long de ce dit troisième trajet, afin de les comprimer ensemble, la longueur de ce troisième trajet de défilement étant déterminée en fonction de la vitesse de défilement dans le but d'obtenir, en final de ce troisième trajet, une stabilisation de l'ensemble des bandes prises en sandwich.

La présente invention a finalement pour autre objet le matériau composite obtenu avec le procédé selon l'invention.

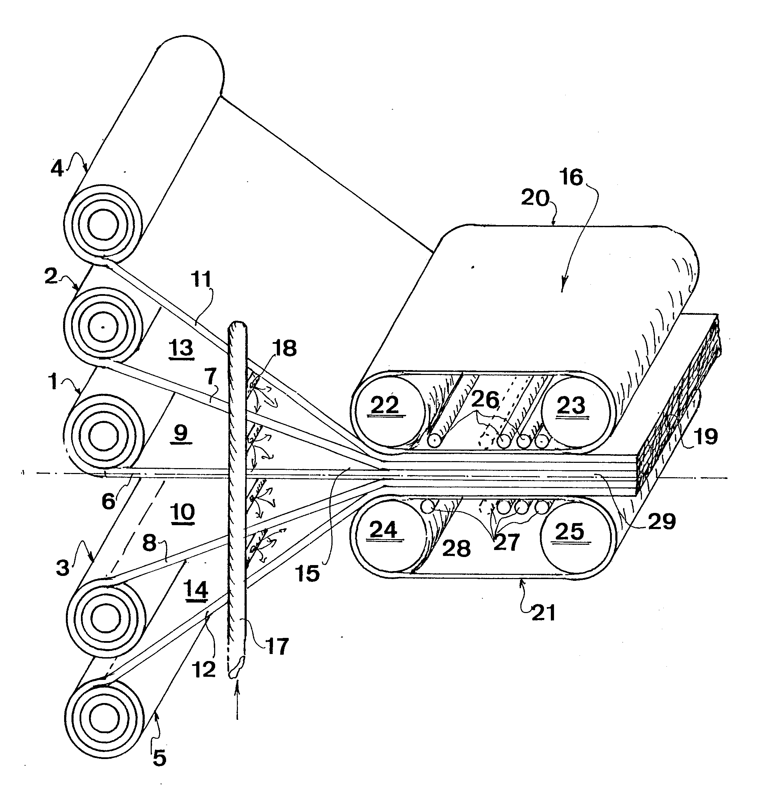

D'autres caractérisitiques et avantages de la présente invention apparaîtront au cours de la description suivante donnée en regard du dessin annexé à titre illustratif mais nullement limitatif, dans lequel la figure unique représente, en perspective et sous forme schématique, un mode de mise en oeuvre du procédé selon l'invention.

La mise en oeuvre de ce procédé consiste essentiellement à fair défiler au moins trois bandes, respectivement de support d'armature, d'une âme de matériau spongieux et d'une couche de démoulant, l'âme de matériau spongieux étant située dans l'espace délimité entre les deux bandes de support d'armature et de la couche de démoulant. Le défilement des bandes s'effectue d'abord sur un premier trajet de telle façon qu'elles soient espacées les unes des autres pour pouvoir injecter une mousse expansible sous forme liquide dans les deux espaces que délimitent les trois bandes. Cette mousse est projetée sur les faces de ces bandes, en particulier les deux faces de l'âme centrale en matériau spongieux, de façon à bien l'imprégner.

Le défilement de ces trois bandes est ensuite prolongé sur un deuxième trajet d'une longueur déterminée permettant à la mousse de bien pénétrer dans le matériau spongieux, ce deuxième trajet étant relativement court.

Un troisième trajet prolonge le deuxième sur une deuxième longueur déterminée. Pendant que s'effectue ce troisième trajet, des forces de pression sont exercées de part et d'autre de l'ensemble des trois bandes afin de les comprimer toutes ensemble. La longueur de ce troisième trajet de défilement est déterminée en fonction, notamment, de la nature des matériaux constituant les bandes, de celle de la mousse expansible et de la vitesse de défilement de ces bandes pour obtenir, en final de ce troisième trajet, une stabilisation de l'ensemble des bandes prises en sandwich, c'est-à-dire en fait, l'expansion totale de la mousse et son séchage complet.

Faisant application des caractéristiques de base du procédé selon l'invention telles que définies ci-dessus, la figure unique représente un exemple avantageux d'une mise en oeuvre de ce procédé, en précisant que, dans cet exemple, il est prévu cinq rouleaux 1-5 de bandes de différents matériaux.

Le rouleau central 1 est constitué, par exemple, par l'enroulement d'une bande de support d'armature capable de se dévider suivant une direction définie dans un plan 6. Deux autres rouleaux 2-3 constitués par les enroulements de deux bandes de matériau spongieux sont respectivement situés dans les deux demi-espaces délimités par le plan de défilement 6 de la bande de support d'armature délivrée par le rouleau 1. Ces deux rouleaux 2 et 3 sont aptes à se dévider suivant deux plans de défilement 7 et 8 définissant, avec le plan de défilement 6, deux espaces 9 et 10 situés de part et d'autre du plant 6.

Enfin, deux autres rouleaux 4 et 5 constitués par les enroulements de deux bandes de matériau de démoulage tel que, par exemple, du papier kraft paraffiné, sont situés de part et d'autre des deux plans de défilement 7 et 8 des deux rouleaux de matériau spongieux 2 et 3. Ces deux rouleaux de matériau de démoulage sont capables de se dévider suivant deux plans de défilement 11 et 12 définissant, avec les deux plans de défilement 7 et 8 respectivement des rouleaux de matériau spongieux 2 et 3, deux espaces 13 et 14.

Avantageusement, pendant le premier trajet des cinq bandes, les quatre espaces 9, 10, 13, 14 ont des épaisseurs décroissantes de façon que les plans de défilement 6, 7, 8, 11, 12 convergent sensiblement vers une bouche d'entrée 15 d'un presseur 16.

En amont de la bouche d'entrée 15 et au départ du deuxième trajet des bandes prolongeant le premier trajet, dans les espaces définis entre les plans de défilement, il est prévu des moyens 17 d'injection d'une mousse expansible sous forme de liquide. Ces moyens sont essentiellement constitués par quatre rampes 18 comportant des gicleurs agencés de façon que la mousse liquide en soit éjectée et dirigée sur les faces des différentes bandes délimitant les espaces mentionnés ci-dessus, mais essentiellement qu'elle soit projetée pour imprégner, de préférence, les deux bandes de matériau spongieux 7 et 8 recevant cette mousse sur respectivement leurs deux faces.

Lorsque ces bandes ont reçu cette mousse sous forme liquide, elles sont introduites dans le presseur 16 par son ouverture d'entrée 15 et sont comprimées ensemble tout au long d'un troisième trajet prolongeant le deuxième, pour obtenir l'expansion de la mousse liquide et son séchage. La longueur de ce troisième trajet est en effet déterminée en fonction d'un certain nombre de paramètres qui tiennent compte essentiellement de la nature du matériau spongieux utilisé, de la qualité de la mousse injectée et, notamment, du temps nécessaire à son expansion et à son séchage complet. Ces paramètres seront très facilement déterminés par l'homme de l'art connaissant les données de la présente invention.

A titre d'exemple, il pourra ainsi être utilisé comme mousses expansibles, toutes les mousses de polyuréthane, les mousses phénoliques ou de polystyrène et leurs dérivés. Le matériau spongieux employé pourra être constitué par des mousses de polyéther, des mousses de PVC, du carton, des molletons et de manière plus générale, tous les agglomérats de fibres ou de copeaux métalliques, par exemple de la paille de fer. Le matériau de support d'armature poura être constitué par du treillis métallique ou synthétique ou encore par des textiles naturels ou synthétiques.

Il a été ci-dessus mentionné que l'ensemble des bandes étaient soumises, sur le troisième trajet, à l'action d'un presseur 16.

Dans un mode avantageux de réalisation, ce presseur est constitué, par exemple, par deux tapis 20 et 21 montés tous les deux rotatifs respectivement sur deux rouleaux 22, 23 et 24, 25 permettant d'obtenir un mouvement de défilement sans fin du même type que les tapis roulants. Ces quatre rouleaux 22-25 sont sensiblement perpendiculaires à la direction de défilement des bandes et sont positionnés de telle façon que la distance séparant les deux rouleaux 22 et 24 les plus proches de la bouche d'entrée 15 soit sensiblement égale à l'épaisseur des bandes imprégnées de la mousse liquide et sensiblement au contact l'une de l'autre, et que celle séparant les deux autres rouleaux 23 et 25 soit d'une valeur sensiblement égale à l'épaisseur de l'ensemble des bandes lorsque la mousse a été stabilisée et comprimée.

De plus, les largeurs des rouleaux 22-25 et des tapis 20, 21 sont au moins égales à celles des différentes bandes qui sont dévidées des rouleaux 1-5.

L'espace délimité entre les deux rouleaux d'entrée 22 et 24 constitue la bouche d'entrée 15 du presseur 16 et les forces qui sont appliquées aux deux tapis, notamment par l'intermédiaire éventuellement des axes de rotation des rouleaux sur lesquels ces tapis s'enroulent dans un mouvement sans fin et, accessoirement, d'une pluralité de rouleaux secondaires presseurs 26 et 27, permettent de comprimer les bandes dans l'espace 28 défini entre les deux faces des tapis 20 et 21 situées en regard l'une de l'autre. Le système de ces deux tapis défilant dans un mouvement sans fin permet de comprimer l'ensemble des bandes tout en permettant leur défilement et ainsi d'obtenir de façon continue, à la sortie 29 du presseur 16, le matériau composite tel que décrit ci-dessus.

Ainsi qu'on a pu le constater, le procédé de l'invention peut être mis en oeuvre aisément sans apport de chaleur extérieure ou emploi d'additifs quelconques tel qu'un agent retardateur d'expansion de la mousse expansible. Il permet d'obtenir un matériau de faible poids mais de grande solidité qui peut trouver de multiples applications dans les domaines les plus divers.

**Revendications**

1. Procédé de réalisation d'un matériau composite, CARACTERISE PAR LE FAIT QU'il consiste à faire expanser une mousse expansible avec un matériau spongieux, en coulant ladite mousse sur ledit matériau.

2. Procédé selon la revendication précédente, CARACTERISE PAR LE FAIT QU'il consiste à faire défiler au moins trois bandes respectivement de support d'armature (6), d'une âme de matériau spongieux (7) et d'un matériau de démoulage (11), la bande de matériau spongieux étant située dans l'espace délimité entre les deux autres bandes, le défilement desdites bandes s'effectuant sur un premier trajet de telle façon qu'elles soient espacées les unes des autres pour pouvoir injecter une mousse expansible sous forme liquide dans les deux espaces (9, 13) délimités entre lesdites trois bandes et respectivement sur les faces de ladite bande de matériau spongieux (7), ledit défilement étant prolongé sur un deuxième trajet d'une longueur déterminée permettant à ladite mousse de pénétrer dans ladite bande de matériau spongieux par ses deux faces opposées, ledit défilement étant prolongé sur au moins un troisième trajet suivant le second sur une deuxième longueur déterminée, des forces de pression (16) étant exercées sur l'ensemble des trois bandes, tout au long de ce dit troisième trajet, afin de les comprimer ensemble, la longueur de ce troisième trajet de défilement étant déterminée en fonction de la vitesse de défilement dans le but d'obtenir, en final de ce troisième trajet, une stabilisation de l'ensemble des bandes prises en sandwich.

3. Procédé selon la revendication 2, CARACTERISE PAR LE FAIT QUE la bande de support d'armature est constituée de treillis métallique ou synthétique ou de textile naturel ou synthétique.

4. Procédé selon la revendication 2, CARACTERISE PAR LE FAIT QUE la bande de matériau de démoulage est du papier kraft paraffiné.

5. Procédé selon l'une des revendications 1 et 2, CARACTERISE PAR LE FAIT QUE le matériau spongieux est choisi parmi les matériaux suivants : mousses de polyéther, mousses de PVC, carton, molletons, agglomérats de fibres ou de copeaux métalliques.

6. Procédé selon l'une des revendications 1 et 2, CARACTERISE PAR LE FAIT QUE la mousse liquide expansible est choisie parmi les suivantes : mousses de polyuréthane, mousses phénoliques, mousses de polystyrène et l'ensemble des dérivés desdites mousses.

7. Procédé selon la revendication 1, CARACTERISE PAR LE FAIT QU'il consiste à faire défiler au moins cinq bandes (1-5) respectivement une bande de support d'armature (16), deux bandes (7, 8) d'une âme de matériau spongieux et deux bandes (11, 12) de matériau de démoulage, les deux bandes de matériau spongieux étant respectivement situées dans les deux espaces délimités entre les deux bandes de matériau démoulant et la bande de support d'armature, le défilement desdites bandes s'effectuant sur un premier trajet de telle façon qu'elles soient espacées les unes des autres pour pouvoir injecter une mousse expansible sous forme liquide dans les quatres espaces (9, 10, 13, 14) délimités entre lesdites cinq bandes et respectivement sur les faces desdites deux bandes de matériau spongieux, ledit défilement étant prolongé sur un deuxième trajet d'une longueur déterminée permettant à ladite mousse de pénétrer dans lesdites bandes de matériau spongieux par leurs deux faces opposées, ledit défilement étant prolongé sur au moins un troisième trajet suivant le second sur une deuxième longueur déterminée, des forces de pression (16) étant exercées sur l'ensemble des cinq bandes, tout au long de ce dit troisième trajet, afin de les comprimer ensemble, la longueur de ce troisième trajet de défilement étant déterminée en fonction de la vitesse de défilement dans le but d'obtenir, en final de ce troisième trajet, une stabilisation de l'ensemble des bandes prises en sandwich.

8. Dispositif pour mettre en oeuvre le procédé selon l'une des revendications 2 à 7, CARACTERISE PAR LE FAIT QU'il comporte des moyens (1-5) pour dérouler au moins trois bandes, respectivement d'un support d'armature (6), d'un matériau spongieux (7, 8) d'un matériau de démoulage (11, 12) sur un premier trajet, de telle façon que lesdites bandes soient espacées les unes des autres, des moyens pour injecter (17) une mousse expansible sous forme liquide dans les espaces (9, 10, 13, 14), et des moyens pour exercer des forces de pression (16) sur l'ensemble des trois bandes après que ladite mousse liquide ait été injectée.

9. Dispositif selon la revendication 8, CARACTERISE PAR LE FAIT QUE les moyens pour exercer des forces de pressions comportent deux tapis (20, 21) montés tous les deux rotatifs respectivement sur deux rouleaux (22, 23, 24, 25) pour obtenir un mouvement de défilement sans fin, lesdits rouleaux (22-25) étant positionnés perpendiculairement à la direction de défilement des bandes et de telle façon que la distance séparant les deux rouleaux (22, 24) les plus proches de l'entrée (15) soit sensiblement égale à l'épaisseur totale de l'ensemble des bandes imprégnées de la mouse liquide, et que celle séparant les deux autres rouleaux (23, 24) soit d'une valeur sensiblement égale à l'épaisseur finale de l'ensemble des bandes lorsque la mousse a été stabilisée et comprimée.

10. Dispositif selon la revendication 9, CARACTERISE PAR LE FAIT QUE les largeurs desdits rouleaux (22-25) et des tapis (20, 21) sont au moins égales à celles des différentes bandes.

11. Produit obtenu selon l'une des revendications de procédé ci-dessus.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | PATENT ABSTRACTS OF JAPAN, vol. 7, no. 110 (M-214)[1255], 13 mai 1983; & JP-A-58 29 639 (MATSUSHITA DENKO K.K.) 21-02-1983Résumé | 1 | B 29 C 67/22 |
| Y | --- | 2-11 | |
| X | PATENT ABSTRACTS OF JAPAN, vol. 7, no. 24 (M-189)[1169], 29 janvier 1983; & JP-A-57 178 729 (IG GIJUTSU KENKYUSHO K.K.) 04-11-1982 * Résumé * | 1 | |
| X | EP-A-0 146 012 (CELOTEX CORP.) * Figures 5,6; pages 5,6,8; revendications 1-8 * | 1 | |
| Y | --- | 2-11 | |
| A | DE-A-3 322 190 (QUITTMAN INDUSTRIE CONSULTING) * Figure 2; revendication 1 * | 1-6 | |
| A | EP-A-0 148 491 (JOST & BRAITSCH oHG) * Revendications 1-12 * | 1,2,4,7 ,8 | **DOMAINES TECHNIQUES RECHERCHES (Int. Cl.4)** B 29 C |
| A | WO-A-8 403 064 (ISOVOLTA) * Figure 1; page 4, lignes 20-28 * | 1,9,10 | |
| A | US-A-2 972 554 (I.E. MUSKAT) * Figure 7 * | 1,2,7,8 | |

Le présent rapport a été établi pour toutes les revendications

| Lieu de la recherche | Date d'achèvement de la recherche | Examinateur |
|---|---|---|
| LA HAYE | 08-09-1988 | WEINBERG J.J.M. |